# EUROPEAN PATENT APPLICATION

(11) **EP 2 564 742 A1**
(43) Date of publication of application: **06.03.2013**
(21) Application number: 11179569.6
(22) Date of filing: 31.08.2011
(51) Int. Cl.: A47J 43/07

(54) **An apparatus for preparing a food stuff**

(71) Applicant: Koninklijke Philips Electronics N.V., 5621 BA Eindhoven (NL)
(72) Inventor: Murbacher, Werner Karl, 5600 AE Eindhoven (NL)
(74) Representative: Damen, Daniel Martijn

(57) **Abstract**

The present application relates to an apparatus for preparing a food stuff. The apparatus has a main body (2) with a rotating shaft (4) and a container (3) in which a food stuff is placed which has a tubular member (8) upstanding in the container with an opening (9) at a free end. The shaft is receivable in the tubular member and forms a fluid seal with the shaft.

## Description

### FIELD OF THE INVENTION

The present invention relates to an apparatus for preparing a food stuff.

### BACKGROUND OF THE INVENTION

It is known to provide a domestic appliance which is used for preparing a food suff comprising a container for receiving food and a main body provided with a drive unit and a rotating shaft. The container comprises a tubular member so that, when the container is disposed on the main body, the rotating shaft extends up into the tubular member.

The rotating shaft of such a domestic appliance extends in the tubular member to an opening formed at the top of the tubular member when the container is disposed on the main body. An insert which is provided with blades or other food preparing means is then engaged with the rotating shaft so that the domestic appliance can perform the desired function, such as mixing or chopping. Furthemore, the insert also creates a seal between the container and the rotating shaft to prevent food and steam from passing along the tubular member and interferring with the rotating shaft and drive unit.

One disadvantage with the above domestic appliance is that the seal between the container and the rotating shaft is dependent on the insert. Therefore, it is possible for a liquid or solid, such as food or steam to enter the opening of the tubular member and contaminate the rotating shaft and affect the performance of the power unit if the insert is incorrectly fitted or not available.

### SUMMARY OF THE INVENTION

Therefore, it is an object of the present invention to provide an apparatus for preparing a food stuff which substantially alleviates or overcomes the problems mentioned above.

According to the present invention, there is provided an apparatus for preparing a food stuff comprising a main body with a rotating shaft and a container for receiving a food stuff having a tubular member upstanding in the container with an opening at a free end, the shaft being receivable in the tubular member, wherein the tubular member is configured to form a seal with the shaft.

This provides the advantage that a seal is always formed when the container is disposed on the main body, avoiding the need for an insert or the like to provide a seal.

Conveniently, a slide fit is formed between the tubular member and the shaft so that the seal is formed between the tubular member and the shaft, and the shaft is able to rotate in the tubular member.

Advantageously, a seal is easily formed by sliding the tubular member onto the shaft. Furthermore, the seal prevents solid, liquid and steam from entering the opening of the tubular member but enables the rotating shaft to rotate within the tubular member.

In one embodiment, the tubular member comprises a sealing element which is configured to form the seal with the shaft.

Advantageously, the sealing element is configured to form a plain bearing with the shaft.

This provides the advantage that the upper end of the rotation shaft is supported as the rotation shaft rotates.

The sealing element may be disposed at the opening of the free end of the tubular member so that a fluid, solid or steam cannot pass through the opening into the tubular member.

This provides the advantage that the whole inside of the tubular member is prevented from being contaminated with fluid, solid or steam.

Advantageously, the sealing element is integrally formed with the container.

Therefore, a seal is always formed as the container is disposed on the main body.

Conveniently, the sealing element is formed from a heat resistant plastic.

Therefore, the sealing element can advantageously be used with an apparatus formed with a heater which provides heat to the container.

The shaft may be configured to extend through the sealing element when the shaft is received in the tubular member.

The shaft may be configured to extend through the opening at the free end of the tubular member when the shaft is received in the tubular member.

In another embodiment, the shaft comprises a sealing element which is configured to form the seal with the shaft.

This provides the advantage of the container being easy to clean.

Conveniently, the rotating shaft is integrally formed with the main body.

Advantageously, the user cannot dissemble the main body, thus a seal between the rotating shaft and the tubular member is always formed during use.

According to another aspect of the invention, there is provided a domestic appliance comprising an apparatus for preparing a food stuff.

### BRIEF DESCRIPTION OF THE DRAWINGS

Embodiments of the invention will now be described, by way of example only, with reference to the accompanying drawings, in which:
Figure 1 shows a side view of an apparatus according to the present invention;
Figure 2 shows a perspective view of a container of the apparatus;
Figure 3 shows a perspective view of the container having received a rotating shaft; and

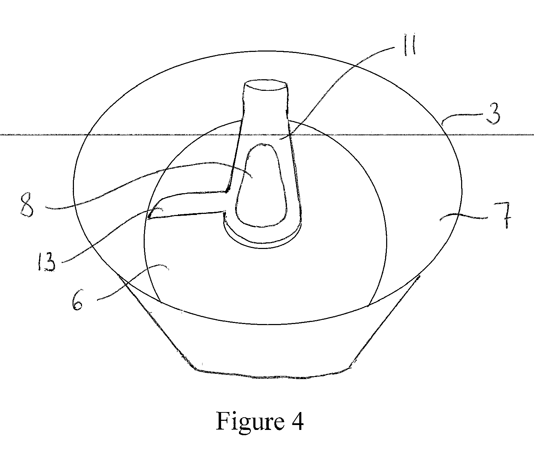

Figure 4 shows a perspective view of the container having an insert.

### DETAILED DESCRIPTION

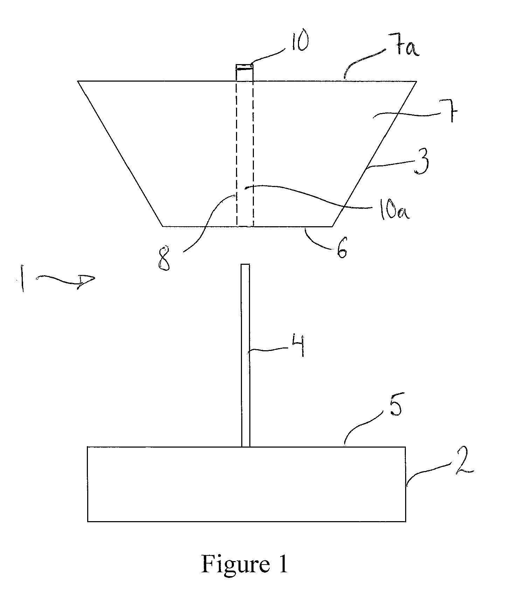

Referring now to Figure 1, an apparatus 1 for preparing a food stuff is shown comprising a main body 2 and a container 3 for receiving said food stuff.

The main body 2 is formed with a drive unit (not shown), a power unit (not shown), a heater (not shown) and a rotating shaft 4 which upstands from an upper face 5 of the main body 2 and is fixedly mounted to the drive unit. The power unit provides power to the drive unit so that it rotates the rotating shaft 4 relative to the main body 2, and power to the heater so that the heater heats up the container 3 and any food stuff received therein.

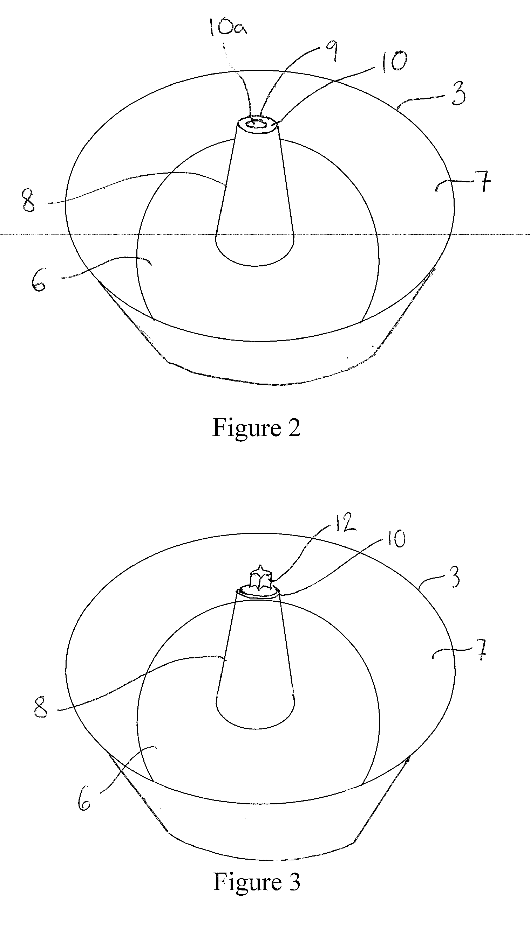

The container 3 has a base 6 and a peripheral side wall 7. A tubular member 8 upstands from the base 6 in the container 3 as shown in Figures 1 to 3. A free end of the tubular member 8, spaced from the base 6 of the container 3, is formed with an opening 9 which is provided with a sealing element 10 as shown in Figure 2. The free end of the tubular member 8 extends above the rim 7a of the container 3 such that the container 3 can be filled with liquid or solid up to said rim 7a. In an alternative embodiment, the free end of the tubular member 8 does not extend beyond the rim 7a of the container 3 and so in this embodiment the height of the tubular member 8 limits the volume of liquid or solid the container 3 can hold.

The sealing element 10 is formed from a heat resistant plastic and is fixedly mounted to the container 3 at the opening 9. Alternatively, the sealing element 10 is integrally formed with the container 3, in which the the sealing element 10 and the tubular member 8 are formed as a single component. The sealing element 10 extends around the rim of the opening 9 and forms an inwardly facing collar.

The sealing element 10 has a bore 10a formed through it with an inner surface. During use, the container 3 is disposed on the main body 2 and the rotating shaft 4 is received in the tubular member 8 so that a portion of the shaft 4 extends through the opening 9 of the tubular member 8, and therefore extends through the bore 10a of the sealing element 10. The diameter of the bore 10a corresponds to the diameter of the section of the shaft 4 extending through the bore 10a of the sealing element 10 to form a slide fit between the rotating shaft 4 and the sealing element 10, so that the sealing element 10 forms a fluid seal with the shaft 4. Therefore, the sealing element 10 prevents a solid or liquid from passing through the opening 9 into the tubular member 8. The slide fit is tight enough to prevent a solid, liquid and/or steam from passing through the opening 9 of the tubular member 8 and contaminating or interferring with the rotating shaft 4, drive unit and the power unit, whilst allowing the rotating shaft 4 to rotate within the tubular member 8 without imparting a large frictional force on the shaft 4 which would resist rotation of the shaft 4.

In addition to forming a seal, the sealing element 10 is configured to form a plain bearing with the rotating shaft 4. The sealing element 10 provides a plain bearing surface which engages the rotating shaft when the container 3 is positioned on the main body 2 and the rotating shaft is received in the tubular member 8. This provides the advantage that the rotating shaft 4 is supported at its upper end when the container is disposed on the main body 2, and wear of a sealing element is prevented.

An insert 11 is received in the container 3 and engages with an insert engaging portion 12 disposed at the upper end of the rotating shaft 4 extending through the opening 9 so that the rotating shaft 4 is able to support and drive the insert 11 when the insert 11 is engaged with the shaft 4. It will be appreciated that the insert therefore does not affect or interfere with the seal formed between the rotating shaft 4 and the tubular member 8. The insert 11 comprises a recess (not shown) for receiving the insert engaging portion 12 of the rotating shaft 4. The insert 11 has a blade 13 to mix the content of the container 3 when the insert 11 is rotated by the rotating shaft 4. Although an insert 11 with a mixing blade 13 is described herein, it will be appreciated that the above arrangement is usable with a number of interchangeable inserts for preparing a food stuff.

It will be appreciated that the above arrangement ensures that a seal is provided at the opening to the tubular member 8 whenever the container 3 is disposed on the main body 2, and so a user is prevented from accidentally or intentionally introducing solid, liquid or steam into the opening 9 which would contaminate the interior of the tubular member 8 and/or affect the power unit, irrespective of whether an insert 11 has been placed into the container 3. Furthermore, as the sealing element is fixedly mounted to or integrally formed with the container 3, there is no risk of misplacing or incorrectly attaching the sealing element. Therefore, a seal is always formed when the user operates the apparatus 1. This is in contrast to the apparatus known from the prior art wherein an insert provides the seal, and the insert may be misplaced or incorrectly attached to the container providing an insufficient seal.

To further prevent a solid, liquid or steam from entering the opening 9 of the tubular member 8, the rotating shaft 4 of the main body 2 is fixedly attached to the main body 2 so that it is not removable therefrom. Therefore, a seal is always formed when the container 3 is placed on the main body 2 and the possibility of a user placing the container 3 on the main body 2 without the rotating shaft 4 extending from the main body leaving the opening 9 exposed is avoided.

It should be appreciated that a range of different types of insert can be used with the apparatus according to the present invention. For example, the insert may be configured to comprise a bottom wall having holes so that by filling up the container with water and switching on the heater the apparatus can be used for steaming food.

Although the sealing element extends from the container in the above described embodiment, it will be understood that in an alternative un-illustrated embodiment of the present invention, the sealing element is fixedly mounted to or integrally formed with the rotating shaft 4. In such an arrangment, an outer surface of the sealing element on the shaft locates against and forms a fluid seal with the inner surface of the tubular member 8 at the opening 9 to the tubular member 8.

Furthermore, the tubular member 8 discussed with reference to Figures 1 to 3 has been described above as having an opening 9 formed with a sealing element 10 and the rotating shaft 4 extending through said opening, however it should be understood that the rotating shaft may not extend through the opening of the tubular member. In this case, the sealing element is located on the inside of the tubular member and engages the top end of the rotating shaft in a similar way as the embodiment described with reference to Figures 1 to 3.

It will be appreciated that the term "comprising" does not exclude other elements or steps and that the indefinite article "a" or "an" does not exclude a plurality. A single processor may fulfill the functions of several items recited in the claims. The mere fact that certain measures are recited in mutually different dependent claims does not indicate that a combination of these measures cannot be used to an advantage. Any reference signs in the claims should not be construed as limiting the scope of the claims.

Although claims have been formulated in this application to particular combinations of features, it should be understood that the scope of the disclosure of the present invention also includes any novel features or any novel combinations of features disclosed herein either explicitly or implicitly or any generalisation thereof, whether or not it relates to the same invention as presently claimed in any claim and whether or not it mitigates any or all of the same technical problems as does the parent invention. The applicants hereby give notice that new claims may be formulated to such features and/or combinations of features during the prosecution of the present application or of any further application derived therefrom.

Other modifications and variations falling within the scope of the claims hereinafter will be evident to those skilled in the art.

## Claims

1. An apparatus for preparing a food stuff comprising a main body (2) with a rotating shaft (4) and a container (3) for receiving a food stuff having a tubular member (8) upstanding in the container with an opening (9) at a free end, the shaft (4) being receivable in the tubular member, wherein the tubular member is configured to form a seal with the shaft.

2. An apparatus according to claim 1, wherein a slide fit is formed between the tubular member (8) and the shaft (4) so that the seal is formed between the tubular member and the shaft, and the shaft is able to rotate in the tubular member.

3. An apparatus according to claim 1, wherein the tubular member (8) comprises a sealing element (10) which is configured to form the seal with the shaft (4).

4. An apparatus according claim 3, wherein the sealing element (10) is configured to form a plain bearing with the shaft (4).

5. An apparatus according to claim 3, wherein the sealing element (10) is disposed at the opening (9) of the free end of the tubular member (8) so that a fluid, solid or steam cannot pass through the opening into the tubular member.

6. An apparatus according to any of claims 3 to 5, wherein the sealing element (10) is integrally formed with the container (3).

7. An apparatus according to any of claims 3 to 6, wherein the sealing element (10) is formed from a heat resistant plastic.

8. An apparatus according to any of claims 3 to 7, wherein the shaft (4) is configured to extend through the sealing element (10) when the shaft is received in the tubular member (8).

9. An apparatus according to claim 1, wherein the shaft (4) is configured to extend through the opening (9) at the free end of the tubular member (8) when the shaft is received in the tubular member.

10. An apparatus according to claim 1 or claim 2, wherein the shaft (4) comprises a sealing element which is configured to form the seal with the shaft.

11. An apparatus according to any preceding claim, wherein the shaft (4) is integrally formed with the main body (2).

12. A domestic appliance comprising an apparatus according to any preceding claim.
